# EUROPÄISCHE PATENTSCHRIFT

(11) **EP 3 012 507 B1**
(45) Veröffentlichungstag und Bekanntmachung des Hinweises auf die Patenterteilung: **06.02.2019**
(21) Anmeldenummer: 14190062.1
(22) Anmeldetag: 23.10.2014
(51) Int. Cl.: F17C 1/06, F17C 1/16

(54) **Verfahren und Werkzeug zur Herstellung eines Druckbehälters und Druckbehälter**
Method and tool for producing a pressure vessel and pressure vessel
Procédé et outil destinés à la fabrication d'un récipient sous pression et récipient sous pression

(43) Veröffentlichungstag der Anmeldung: 27.04.2016
(73) Patentinhaber: Magna Steyr Fuel Systems GesmbH, 8261 Sinabelkirchen (AT)
(72) Erfinder: Palvoelgyi, Sandor, 8200 Gleisdorf (AT); Pozgainer, Günther, 8045 Graz (AT)
(74) Vertreter: Zangger, Bernd

(56) Entgegenhaltungen:
- EP-A1- 0 323 776
- EP-A1- 0 810 081
- EP-A1- 2 236 903
- WO-A1-2007/079971
- WO-A1-2014/014049
- WO-A2-2014/121935
- DE-A1-102006 004 121
- DE-A1-102010 049 838
- DE-A1-102011 116 553

## Beschreibung

### Gebiet der Erfindung

Die vorliegende Erfindung betrifft ein Verfahren zur Herstellung eines Druckbehälters und ein Werkzeug zur Herstellung eines Druckbehälters durch ein solches Verfahren.

### Stand der Technik

Druckbehälter sind hinlänglich bekannt und werden beispielsweise zur Speicherung von Hochdruck-Erdgas (Compressed Natural Gas, CNG) als Kraftstoff in Kraftfahrzeugen verwendet. Derartige Druckbehälter können aus einem Innenbehälter, auch "Liner" genannt, bestehen, der mit einem Fasermaterial umwickelt wird. Es ist bekannt Metallteile im Druckbehälter vorzusehen, die insbesondere der Aufnahme von Armaturen, wie Ventilen, dienen können und auch als "Boss" bezeichnet werden. Für die Herstellung des Innenbehälters kann beispielsweise das Extrusionsblasformverfahren verwendet werden, bei dem ein extrudierter schlauchförmiger Vorformling blasgeformt wird.

So offenbart zum Beispiel die DE 10 2011 116 553 A1 ein Verfahren zur Herstellung eines Verbund-Druckbehälters mit einem Innenbehälter aus thermoplastischem Kunststoff, wenigstens einem in einem Halsbereich vorgesehenen Polstück sowie mit einer den Innenbehälter verstärkenden Wicklung aus einem Faserwerkstoff, wobei das Verfahren die Herstellung des Innenbehälters durch Extrusionsblasformen umfasst, wobei das Polstück bei der Ausformung des Innenbehälters an den Innenbehälter angeformt wird, derart, dass das Polstück von dem Innenbehälter zumindest teilweise umschlossen wird. Das Polstück ist zweiteilig ausgebildet und umfasst eine außerhalb des Innenbehälters angeordnete Polkappe, wobei die Wandung des Innenbehälters im Halsbereich zwischen dem Polstück und der Polkappe eingespannt ist. Das Polstück wird nach Fertigstellung des Innenbehälters von außen mit einem Konterelement gegen die Wandung des Behälters gesichert.

Die EP 2 236 903 A1 offenbart ein Verfahren zum Herstellen eines Druckbehälter-Rohlings, dessen Körper über eine Schulter in einen Hals und eine Mündung übergeht, die zum Einschrauben eines Ventils ausgebildet ist, wobei das Verfahren folgende Schritte umfasst:
- Extrudieren eines Schlauches aus einem thermoplastischen Kunststoff (von oben) in eine offene Blasform, deren Kavität das Negativ des Rohlings ist,
- Schließen der Blasform und Einleiten von Druckluft zum Ausformen des Rohlings,
- Öffnen der Blasform nach einer Kühlzeit und Entnehmen des Rohlings, wobei bei offener Blasform ein Metalleinsatz mit der Innenkontur zumindest der Schulter des Rohlings in den entsprechenden Bereich der Kavität eingebracht wird und der Schlauch, diesen Metalleinsatz umgebend, in die offene Blasform extrudiert wird.

### Zusammenfassung der Erfindung

Es ist eine Aufgabe der Erfindung, ein Verfahren zur Herstellung eines Druckbehälters und ein Werkzeug zur Herstellung eines Druckbehälters durch ein solches Verfahren, so dass eine einfache und kostengünstige Herstellung des Druckbehälters ermöglicht wird.

Die Lösung der Aufgabe erfolgt durch ein Verfahren zur Herstellung eines Druckbehälters umfassend einen Innenbehälter aus thermoplastischem Kunststoff, wobei der Innenbehälter aus einem Vorformling in einem Werkzeug blasgeformt wird und wobei zumindest ein Metallteil während dem Blasformen in den Innenbehälter eingebettet ist, wobei beim Blasformen am Innenbehälter ein Kragen ausgebildet wird der das Metallteil umfasst, wobei der Kragen beim Blasformen so ausgebildet wird, dass er zum Metallteil gasdicht ist, wobei das Metallteil vor dem Blasformen auf einem Injektor zum Einpressen eines Gases angebracht wird, wobei das Metallteil auf einen am Injektor drehbaren und axial festen Adapter angebracht wird.

Erfindungsgemäß wird der Innenbehälter des Druckbehälters aus einem Vorformling blasgeformt und dabei gleichzeitig ein Kragen am Innenbehälter ausgeformt der das eingebettete Metallteil umgibt. Mit Hilfe der Auskragung kann eine Gasdichtheit zwischen Metallteil und Innenbehälter auf einfachste Weise hergestellt werden. Ein nachträglicher Verfahrensschritt und ein komplizierterer Aufbau der beispielsweise Metallzwischenstücke oder Gegenelemente erfordert kann vermieden werden.

In einem erfindungsgemäßen Verfahren wird das Metallteil vor dem Blasformen auf einem Injektor zum Einpressen der Luft angebracht. Das Metallteil wird auf einen am Injektor drehbaren und axial festen Adapter angebracht.

Der Vorformling kann vorzugsweise extrudiert und schlauchförmig sein.

Nach dem Extrusionsblasformen mit eingebettetem Metallteil wird der Innenbehälter üblicherweise mit Fasern umwickelt.

Vorzugsweise wird beim Blasformen der Kragen zum Metallteil durch ein flexibles Dichtelement, insbesondere einen Dichtring, und/oder durch eine Dichtmasse abgedichtet um die Gasdichtheit zwischen Metallteil und Kragen herzustellen.

Bevorzugt wird der Innenbehälter am Kragen axial außerhalb der Abdichtung zum Metallteil abgequetscht oder abgetrennt, so dass eine saubere Trennung des Überhanges des Vorformlings vom Innenbehälter ermöglicht wird.

Das Metallteil kann insbesondere eine Armaturaufnahme, wie eine Ventilaufnahme, sein oder ein Befestigungsteil, wobei das Befestigungsteil der Befestigung des Druckspeichers zum Beispiel in einem Fahrzeug dienen kann. Erfindungsgemäß kann auch sowohl eine Armaturaufnahme als auch ein weiteres Metallteil, wie ein Befestigungsteil, bevorzugt an entgegengesetzten Enden des Druckspeichers, in den Innenbehälter eingebettet sein.

Bevorzugt weist das Metallteil eine nicht-rotationssymmetrische Form auf, so dass durch das Einbetten in den Innenbehälter eine formschlüssige Verdrehsicherung für das Metallteil gegeben ist.

Bevorzugt weist das Metallteil Ausformungen auf, so dass durch das Einbetten in den Innenbehälter eine formschlüssige Axialverschiebungssicherung gegeben ist, insbesondere Nuten, Vertiefungen oder Erhebungen.

Besonders bevorzugt können auf dem selben Injektor zwei Metallteile aufgebracht werden, die in den Innenbehälter eingebettet werden - insbesondere an den zwei gegenüberliegenden Endkappen des Druckbehälters. Der Injektor kann auf einem Maschinenschlitten angebracht sein, der die Positionierung des Injektors mit aufgebrachten Metallteilen in der gewünschten Position innerhalb des Vorformlings und die Entfernung des fertigen Druckbehälters aus dem Formbereich nach dem Blasformen ermöglicht. Ein weiteres Metallteil kann bevorzugt an einem Ende des Injektors aufgesteckt werden.

Ein Druckbehälter umfasst einen Innenbehälter aus thermoplastischem Kunststoff und zumindest ein in den Innenbehälter eingebettetes Metallteil, wobei am Innenbehälter ein Kragen ausgebildet ist der das Metallteil umfasst, wobei der Kragen so ausgebildet ist, dass er zum Metallteil gasdicht ist. Die Gasdichtheit kann insbesondere durch ein flexibles Dichtelement und/oder durch eine Dichtmasse erreicht werden. Der Druckbehälter kann die weiteren zuvor für das Verfahren beschriebenen Merkmale aufweisen.

Insbesondere kann das Metallteil des Druckbehälters eine Armaturaufnahme, insbesondere eine Ventilaufnahme, sein, wobei die Armaturaufnahme bevorzugt ein Innengewinde zum Einschrauben einer Armatur aufweisen kann. Die Armatur kann ein Ventil oder eine Einrichtung zur Gasentnahme sein.

An einander gegenüberliegenden Enden des Innenbehälters kann jeweils ein Metallteil eingebettet sein, wobei jeweils ein Kragen am Innenbehälter ausgebildet ist der das jeweilige Metallteil umfasst, wobei der Kragen jeweils so ausgebildet ist, dass er zum jeweiligen Metallteil gasdicht ist.

Ein erfindungsgemäßes Werkzeug zur Herstellung eines Druckbehälters nach einem beschriebenen Verfahren wird gemäss Anspruch 7 definiert.

Das Werkzeug ist bevorzugt so ausgebildet, dass auf ein eingebrachtes Metallteil radial außen am Metallteil ein flexibles Dichtelement und/oder eine Dichtmasse aufgebracht werden kann.

Besonders bevorzugt weist der Adapter ein Außengewinde auf, so dass das Metallteil wenn es ein Innengewinde aufweist aufgeschraubt werden kann.

Zwischen dem Injektor und dem Adapter kann eine drehbare Dichtung angeordnet sein. Der Adapter kann einen Kontaktabschnitt aufweisen, der dazu ausgebildet ist, mit einem aufgenommenen Metallteil in abdichtendem Kontakt zu sein, insbesondere um einen Metall-zu-Metall Kontakt zu bilden.

Das Werkzeug umfasst vorzugsweise einen Antrieb, so dass der Adapter über den Antrieb in Drehbewegung versetzt werden kann.

Der Adapter ist bevorzugt als Hohlform ausgebildet und umgibt den Injektor, der selbst als zumindest teilweise hole Welle ausgeführt sein kann, radial.

An einem Ende des Injektors kann eine Aufnahme für ein weiteres Metallteil ausgebildet sein.

### Kurzbeschreibung der Zeichnungen

Die Erfindung wird im Folgenden beispielhaft unter Bezugnahme auf die Zeichnungen beschrieben.
Fig. 1 ist eine Schnittansicht eines Innenbehälters eines Druckbehälters, der nach dem erfindungsgemässen Verfahren hergestellt wird.
Fig. 2 ist eine Detaildarstellung die das in Fig. 1 oben dargestellte Metallteil (Endstück) zeigt.
Fig. 3 ist eine Detaildarstellung die das in Fig. 1 unten dargestellte Metallteil (Ventilaufnahme) zeigt.
Fig. 4 ist eine dreidimensionale Darstellung des Metallteils gemäß Fig. 3.
Fig. 5 ist eine Schnittdarstellung eins erfindungsgemäßen Werkzeugs.
Fig. 6 ist eine Detaildarstellung die den Aufnahmebereich des in Fig. 5 unten dargestellten Metallteils (Ventilaufnahme) zeigt.
Fig. 7 ist eine Detaildarstellung die den Aufnahmebereich des in Fig. 5 oben dargestellten Metallteils (Endstück) zeigt.
Fig. 8 ist eine dreidimensionale Darstellung des Klemmstückes gemäß Fig. 7.
Fig. 9 ist eine dreidimensionale Darstellung eines Innenbehälters eines Druckbehälters die einen Verfahrensschritt bei der Herstellung des Druckbehälters zeigt.
Fig. 10 ist eine Detaildarstellung des in Fig. 9 unten dargestellten Endbereichs.
Fig. 11 ist eine Schnittansicht des Endbereichs gemäß Fig. 10.
Fig. 12 ist eine dreidimensionale Ansicht eines Innenbehälters eines Druckbehälters.

### Detaillierte Beschreibung der Erfindung

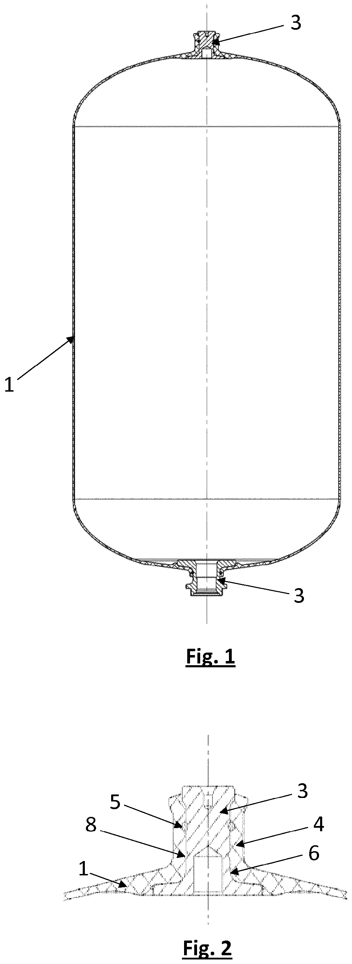

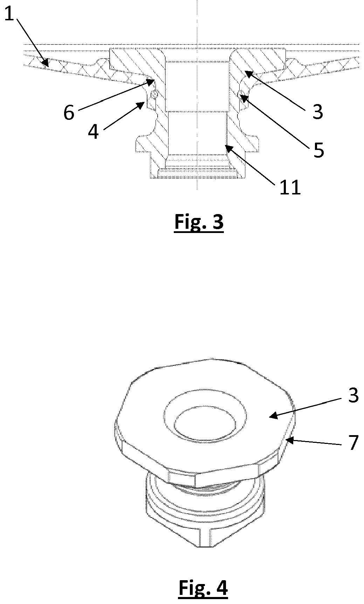

Fig. 1 ist eine Schnittansicht eines Innenbehälters 1 eines Druckbehälters. Die Fig. 2 und Fig. 3 zeigen die Endbereiche des Innenbehälters im Detail.

Der Innenbehälter 1 besteht aus thermoplastischem Kunststoff und weist zwei eingebettete Metallteil 3 an den Endkappen des Innenbehälters 1 auf. Das in Fig. 1 oben dargestellte Metallteil 3 ist ein Endstück, dass in Fig. 1 unten dargestellte Metallteil 3 ist eine Ventilaufnahme.

Bei der vorgeschlagenen Lösung sind die Metallteile 3 im extrusionsblasgeformten Innenbehälter 1 (Liner) direkt eingebettet. Für die Abdichtung zwischen Innenbehälter 1 und Metallteilen 3 dienen jeweils miteingebettete O-Ringe als Dichtelemente 5 und optional zusätzlich geeignete Dichtmassen 6, beispielsweise Kleber. Am Innenbehälter 1 sind dazu Kragen 4 ausgebildet, die die Metallteile 3 jeweils umfassen. Die Kragen 4 sind durch die dort angeordneten Dichtelemente 5 und gegebenenfalls Dichtmassen 6 so ausgebildet, dass sie zum jeweiligen Metallteil 3 gasdicht sind.

Das in Fig. 2 gezeigte Metallteil 3 weist als Ausformung 8 eine umlaufende Nut auf, so dass durch das Einbetten des Metallstücks 3 in den Innenbehälter 1 eine formschlüssige Axialverschiebungssicherung gegeben ist.

Das in Fig. 3 dargestellte Metallteil 3 ist eine Ventilaufnahme und weist daher ein Innengewinde 11 auf, zum Einschrauben eines Ventils.

Fig. 4 zeigt die Ventilaufnahme dreidimensional, wobei die Flachstellen dem metallteil 3 eine nicht-rotationssymmetrische Form 7 geben, so dass durch das Einbetten in den Innenbehälter 1 eine formschlüssige Verdrehsicherung gegeben ist.

Die Methode und das Werkzeug zur Herstellung des Innenbehälters wird im Folgenden dargestellt.

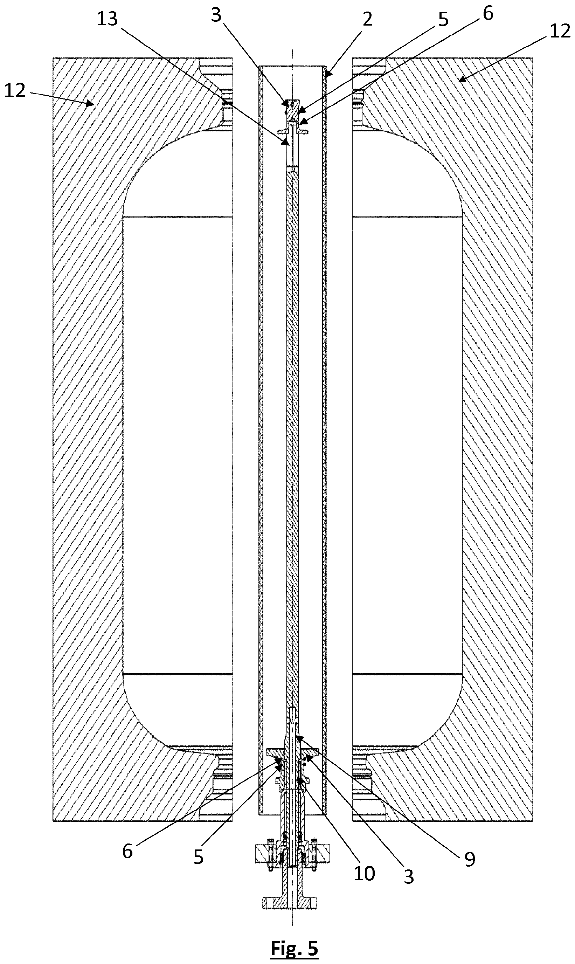

Fig. 5 zeigt das erfindungsgemäße Werkzeug als Ganzes. Das Werkzeug umfasst einen Injektor 9 zum Einpressen von Druckluft und zwei Formhälften 12. Der Injektor 9 hat im unteren Bereich einen Adapter 10 als Aufnahme für ein Metallteil 3, nämlich die Ventilaufnahme, und am Ende des Injektors 9 ein Klemmstück 13 als Aufnahme für ein weiteres Metallteil, nämlich ein Endstück. Die Metallteile 3 können auf dem Injektor 9 in einen schlauchförmigen extrudierten Vorformling 2, zwischen den beiden Formhälften 12 eingebracht werden. Der Injektor 9 und die Formhälften 12 sind so ausgebildet, dass durch Schließen der Formhälften 12 und durch anschließendes Blasformen mittels Einpressen von Luft durch den Injektor 9 - durch die ganz unten dargestellte offene axiale Bohrung des Injektors 9 - zusätzlich zur allgemeinen Formgebung des Innenbehälters 1 an jedem Ende ein Kragen 4 am Vorformling 2 ausgebildet wird, der das jeweilige Metallteil 3 umfasst und zum jeweiligen Metallteil 3 gasdicht ist.

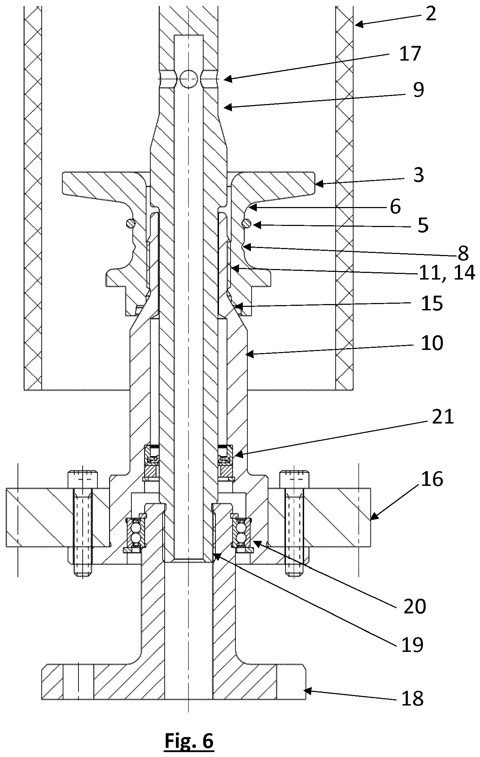

Fig. 6 ist eine Detaildarstellung die den Adapter 10 genauer zeigt. Der Adapter 10 ist drehbar um den Injektor 9 angeordnet. Der Adapter 10 hat an seinem oberen Ende ein Außengewinde 14, auf dem das Metallteil 3 (Ventilfitting) mittels dessen Innengewinde 11 aufgeschraubt wird. Das Metallteil 3 dichtet sich einerseits im Gewinde 11,14, anderseits auf einem Kegel als Kontaktabschnitt 15 des Adapters, welcher Metall-zu-Metall Kontakt zu der Ventilaufnahme 3 hat. Der Adapter 10 kann über ein Zahnrad oder eine Zahnriemenscheibe als Antrieb 16 in Drehung versetzt werden. Auf das auf den Adapter 10 aufgebrachte Metallteil 3 wird ein O-Ring als Dichtelement 5 gesetzt, optional auch eine Klebe- und Dichtmasse 6. Die in den Injektor 9 eingebrachte Druckluft kann über Auslässe 17 aus dem Injektor 9 in den Innenraum des Vorformlings 2 gelangen, um diesen gegen die Formhälften 12 zu drücken. Am unteren Ende des Injektors 9 ist dieser über eine dichte Verschraubung 19 mit einem Vertikalschlitten 18 fest verbunden. Am Vertikalschlitten 18 ist auch der Adapter 10 über eine Lagerung 20 drehbar gelagert. Zwischen Injektor 9 und Adapter 10 ist eine Hochdruck-Wellendichtung 21 angeordnet.

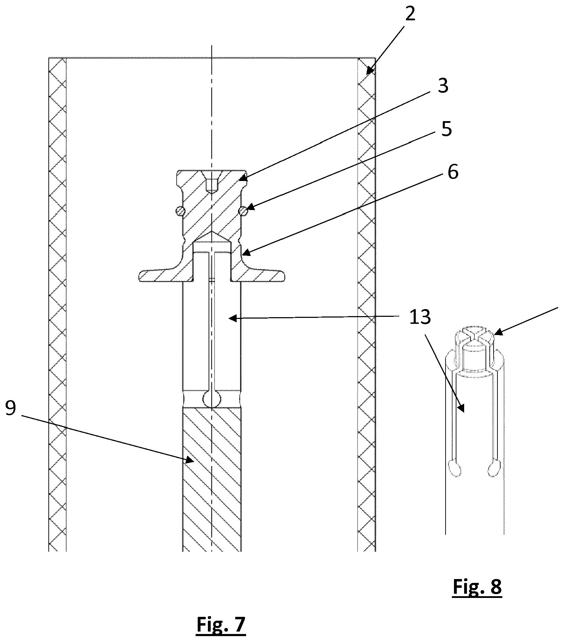

Fig. 7 zeigt den Aufnahmebereich des in Fig. 5 oben dargestellten Metallteils 3, nämlich den Bereich in dem ein Endstück 3 auf ein Klemmstück 13 des Injektors 9 aufgesteckt werden kann. Fig. 8 zeigt das Klemmstück 13 allein, das an dessen Ende eine viergeteilte Wulst mit Übermaß ausbildet, so dass ein Metallteil 3 auf das Ende aufgesteckt werden kann.

In einem erfindungsgemäßen Herstellungsverfahren wird nach Aufbringen der Metallteile 3 auf den Injektor 9 zunächst ein Maschinenschlitten, auf welchem der Injektor 9 sitzt, hinaufgefahren und der Injektor 9 in den Vorformling 2 hineingeführt. Nach Schließen der Formhälften 12 wird die Pressluft durch den Injektor 9 und die Auslässe 17 hineingeblasen und hierdurch der Innenbehälter 1 geformt. Dir Formhälften 12 quetschen den Schlauch 2 auf die Metallteile 3 und komprimieren dabei die O-Ringe 5. Dadurch wird die Dichtung zwischen dem Liner 1 und den Metallteilen 3 erzeugt. Nach dem Blasen werden die Formhälften 12 auseinandergefahren, der Adapter 10 mittels Zahnrad- oder Riemenantrieb 16 gedreht und dadurch aus dem Nippel der Ventilaufnahme 3 herausgeschraubt. Wenn der Adapter 10 unten aus der Ventilaufnahme 3 herausgeschraubt wird, wird der Innenbehälter 1 dabei mit dem Endstück 3 oben vom Injektor 9 abgehoben. Der Zahnrad- oder Riemenantrieb 16 bewirkt daher gleichzeitig das Abheben des Innenbehälters 1 von dem oberen Klemmstück 13. Nun kann der Schlitten 18 nach unten fahren und der Innenbehälter 1 kann von dem Injektor 9 abgenommen werden.

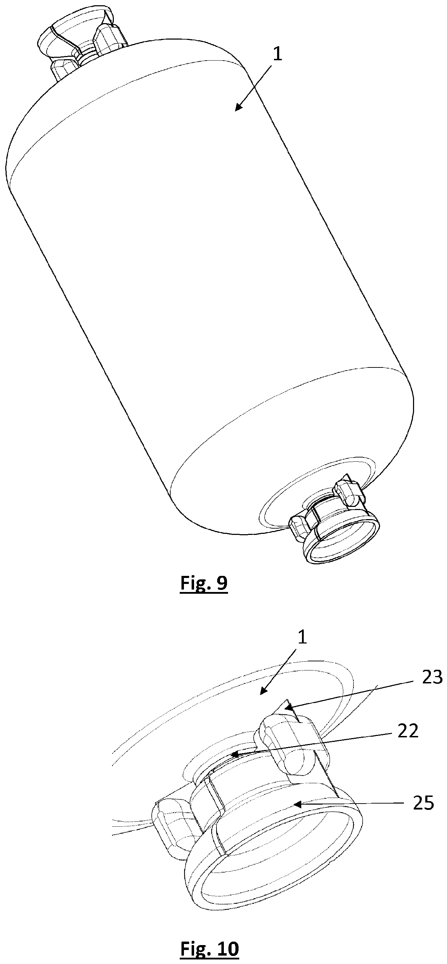

Fig. 9 ist eine Darstellung eines Innenbehälters 1 während der Herstellung und zeigt wie der Liner 1 aus den Formhälften 12 nach dem Blasformen mit überschüssigem Material an den Endkappen entnommen wird.

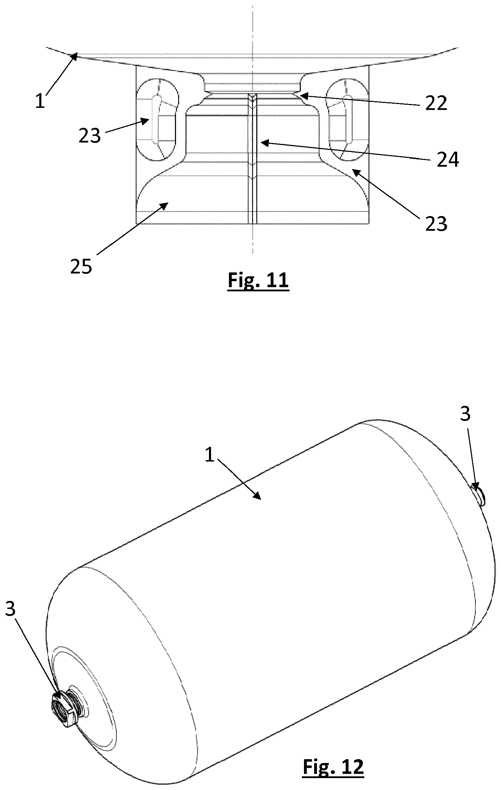

Fig. 10 ist eine Detaildarstellung des in Fig. 9 unten dargestellten Endbereichs und Fig. 11 eine Schnittansicht dieses Endbereichs. Eine beim Blasformen ausgeformte Einkerbung 22 axial außerhalb des Nutzbereichs des Innenbehälters 1 erleichtert die Entfernung des Abfalls 25. Ein Materialaustritt 23 des Materials des Vorformlings 2 zwischen den Formhälften 12 (Flash), ist nur einige Zehntelmillimeter dick. Der Flash kann problemlos entfernt werden. Eine Kerbe 24, ebenfalls beim Blasformen ausgebildet, ermöglicht das Brechen des Abfalls 25 in Teile.

Fig. 12 zeigt schließlich einen Innenbehälter 1 eines Druckbehälters mit eingebetteten Metallteilen 3, nach der Entfernung des Abfalls 25.

### Bezugszeichenliste

- 1: Innenbehälter
- 2: Vorformling
- 3: Metallteil
- 4: Kragen
- 5: Dichtelement
- 6: Dichtmasse
- 7: nicht-rotationssymmetrische Form
- 8: Ausformung
- 9: Injektor
- 10: Adapter
- 11: Innengewinde
- 12: Formhälfte
- 13: Klemmstück
- 14: Außengewinde
- 15: Kontaktabschnitt
- 16: Antrieb
- 17: Auslass
- 18: Vertikalschlitten
- 19: Verschraubung
- 20: Lagerung
- 21: Hochdruck-Wellendichtung
- 22: Einkerbung
- 23: Materialaustritt
- 24: Kerbe
- 25: Abfall

## Patentansprüche

1. Verfahren zur Herstellung eines Druckbehälters umfassend einen Innenbehälter (1) aus thermoplastischem Kunststoff, wobei der Innenbehälter aus einem Vorformling (2) in einem Werkzeug blasgeformt wird und wobei zumindest ein Metallteil (3) während dem Blasformen in den Innenbehälter (1) eingebettet ist, wobei beim Blasformen am Innenbehälter (1) ein Kragen (4) ausgebildet wird der das Metallteil (3) umfasst, wobei der Kragen (4) beim Blasformen so ausgebildet wird, dass er zum Metallteil (3) gasdicht ist, wobei das Metallteil (3) vor dem Blasformen auf einem Injektor (9) zum Einpressen eines Gases angebracht wird, **dadurch gekennzeichnet dass** das Metallteil (3) auf einen am Injektor (9) drehbaren und axial festen Adapter (10) angebracht wird.

2. Verfahren nach Anspruch 1,
**dadurch gekennzeichnet, dass** beim Blasformen der Kragen (4) zum Metallteil (3) durch ein flexibles Dichtelement (5), insbesondere einen Dichtring, und optional zusätzlich mit einer Dichtmasse (6) abgedichtet wird.

3. Verfahren nach zumindest einem der vorhergehenden Ansprüche,
**dadurch gekennzeichnet, dass** der Innenbehälter (1) am Kragen (4) axial außerhalb der Abdichtung (5, 6) zum Metallteil (3) abgequetscht oder abgetrennt wird.

4. Verfahren nach zumindest einem der vorhergehenden Ansprüche,
**dadurch gekennzeichnet, dass** das Metallteil (3) eine Armaturaufnahme, insbesondere Ventilaufnahme, ist oder ein Befestigungsteil.

5. Verfahren nach zumindest einem der vorhergehenden Ansprüche,
**dadurch gekennzeichnet, dass** das Metallteil (3) eine nicht-rotationssymmetrische Form (7) aufweist, so dass durch das Einbetten in den Innenbehälter (1) eine formschlüssige Verdrehsicherung gegeben ist.

6. Verfahren nach zumindest einem der vorhergehenden Ansprüche,
**dadurch gekennzeichnet, dass** das Metallteil (3) Ausformungen (8) aufweist, so dass durch das Einbetten in den Innenbehälter (1) eine formschlüssige Axialverschiebungssicherung gegeben ist, insbesondere Nuten, Vertiefungen oder Erhebungen.

7. Werkzeug zur Herstellung eines Druckbehälters umfassend einen Innenbehälter aus thermoplastischem Kunststoff und zumindest ein in einem Kragen des Innenbehälters gasdicht eingebettetes Metallteil, durch ein Verfahren nach zumindest einem der Ansprüche 1 bis 6, wobei das Werkzeug einen Injektor (9) zum Einpressen eines Gases -insbesondere von Druckluft- und zwei Formhälften (1 2) umfasst, wobei der Injektor (9) eine Aufnahme (10, 13) aufweist, die dafür ausgebildet ist das zumindest ein Metallteil aufzunehmen, wobei das Werkzeug dafür ausgebildet ist, um das Metallteil (3) auf dem Injektor (9) in ein Vorformling (2) und zwischen die beiden Formhälften (12) einbringen zu können, und wobei der Injektor (9) und die Formhälften (12) so ausgebildet sind, dass durch Blasformen mittels Einpressen von Gas durch den Injektor (9) und durch Schließen der Formhälften (12) ein Kragen (4) am Vorformling (2) ausgebildet wird der das Metallteil (3) umfasst, wobei der Kragen (4) beim Blasformen so ausgebildet wird, dass er zum Metallteil (3) gasdicht ist, **dadurch gekennzeichnet dass** der Injektor von einem drehbaren und axial festen Adapter umfasst ist, und wobei der Adapter dafür ausgebildet ist, das Metallteil aufzunehmen.

8. Werkzeug nach Anspruch 7, **dadurch gekennzeichnet, dass** der Adapter (10) ein Außengewinde (14) aufweist, so dass das Metallteil (3) wenn es ein Innengewinde (11) aufweist aufgeschraubt werden kann.

9. Werkzeug nach Anspruch 7 oder 8, **dadurch gekennzeichnet, dass** zwischen dem Injektor (9) und dem Adapter (10) eine drehbare Dichtung angeordnet ist und/oder dass der Adapter (10) einen Kontaktabschnitt (15) aufweist, der dazu ausgebildet ist, mit einem aufgenommenen Metallteil (3) in abdichtendem Kontakt zu sein.

10. Werkzeug nach zumindest einem der Ansprüche 7 bis 9, **dadurch gekennzeichnet, dass** das Werkzeug einen Antrieb (16) umfasst, so dass der Adapter (10) über den Antrieb (16) in Drehbewegung gebracht werden kann.

11. Werkzeug nach zumindest einem der Ansprüche 7 bis 10, **dadurch gekennzeichnet, dass** der Adapter (10) als Hohlform ausgebildet ist und den Injektor (9) radial umgibt.

12. Werkzeug nach zumindest einem der Ansprüche 7 bis 11, **dadurch gekennzeichnet, dass** an einem Ende des Injektors (9) eine Aufnahme (13) für ein weiteres Metallteil (3) ausgebildet ist.

## Claims

1. Method for producing a pressure vessel comprising an inner container (1) made of thermoplastic plastic, wherein the inner container is blow-moulded from a preform (2) in a tool and wherein at least one metal part (3), during the blow moulding, is embedded in the inner container (1), wherein, in the blow moulding, a collar (4) comprising the metal part (3) is configured on the inner container (1), the collar (4) being formed in the blow moulding such that it is gas-tight with respect to the metal part (3), wherein the metal part (3), prior to the blow moulding, is fitted on an injector (9) for the injection of a gas, **characterized in that** the metal part (3) is fitted onto an adapter (10) which is rotatable and axially fixed on the injector (9).

2. Method according to Claim 1,
**characterized in that,** in the blow moulding, the collar (4) is sealed off from the metal part (3) by a flexible sealing element (5), in particular a sealing ring, and is optionally additionally sealed off with a sealing compound (6).

3. Method according to at least one of the preceding claims,
**characterized in that** the inner container (1), at the collar (4), is pinched off or separated off axially outside the seal (5, 6) against the metal part (3).

4. Method according to at least one of the preceding claims,
**characterized in that** the metal part (3) is a fitting receptacle, in particular a valve receptacle, or a fastening part.

5. Method according to at least one of the preceding claims,
**characterized in that** the metal part (3) has a non-rotationally symmetric shape (7), so that as a result of the embedment in the inner container (1), a positive-locking anti-twist device is given.

6. Method according to at least one of the preceding claims,
**characterized in that** the metal part (3) has mouldings (8), so that, as a result of the embedment in the inner container (1), a positive-locking axial displacement protection is given, in particular grooves, depressions or elevations.

7. Tool for producing a pressure vessel comprising an inner container made of thermoplastic plastic and at least one metal part embedded so that it is gas-tight in a collar of the inner container, by a method according to at least one of Claims 1 to 6, wherein the tool comprises an injector (9), for the injection of a gas - in particular compressed air -, and two mould halves (1 2), wherein the injector (9) has a receptacle (10, 13) which is configured to receive the at least one metal part, wherein the tool is configured to be able to insert the metal part (3) on the injector (9) into a preform (2) and between the two mould halves (12), and wherein the injector (9) and the mould halves (12) are configured such that by blow moulding, by means of injection of gas through the injector (9) and by closure of the mould halves (12), a collar (4), comprising the metal part (3), is configured on the preform (2), the collar (4) being formed in the blow moulding such that it is gas-tight with respect to the metal part (3), **characterized in that** the injector is comprised by a rotatable and axially fixed adapter, and wherein the adapter is configured to receive the metal part.

8. Tool according to Claim 7,
**characterized in that** the adapter (10) has an external thread (14), so that the metal part (3), if it has an internal thread (11), can be screwed on.

9. Tool according to Claim 7 or 8,
**characterized in that** between the injector (9) and the adapter (10) is arranged a rotatable seal, and/or **in that** the adapter (10) has a contact portion (15) which is configured to be in sealing contact with a received metal part (3) .

10. Tool according to at least one of Claims 7 to 9, **characterized in that** the tool comprises a drive (16), so that the adapter (10) can be brought into rotary motion by means of the drive (16).

11. Tool according to at least one of Claims 7 to 10, **characterized in that** the adapter (10) is configured as a hollow mould and radially surrounds the injector (9).

12. Tool according to at least one of Claims 7 to 11, **characterized in that** at one end of the injector (9) is configured a receptacle (13) for a further metal part (3).

## Revendications

1. Procédé de fabrication d'un récipient sous pression, comprenant un récipient intérieur (1) en matière plastique thermoplastique, le récipient intérieur étant formé par soufflage dans un outil à partir d'une préforme (2) et au moins une partie métallique (3) étant incorporée dans le récipient intérieur (1) au cours du formage par soufflage, un collet (4) étant réalisé au niveau du récipient intérieur (1) lors du formage par soufflage, lequel comprend la partie métallique (3), le collet (4) étant réalisé lors du formage par soufflage de telle sorte qu'il soit étanche aux gaz par rapport à la partie métallique (3), la partie métallique (3) étant montée avant le formage par soufflage sur un injecteur (9) en vue de l'injection d'un gaz, **caractérisé en ce que** la partie métallique (3) est montée sur un adaptateur (10) fixé axialement et pouvant tourner sur l'injecteur (9).

2. Procédé selon la revendication 1, **caractérisé en ce que** le collet (4), lors du formage par soufflage, est étanchéifié par rapport à la partie métallique (3) par un élément d'étanchéité flexible (5), en particulier une bague d'étanchéité, et facultativement en outre avec une masse d'étanchéité (6).

3. Procédé selon au moins l'une quelconque des revendications précédentes, **caractérisé en ce que** le récipient intérieur (1) est pressé ou séparé au niveau du collet (4) axialement à l'extérieur du joint d'étanchéité (5, 6) par rapport à la partie métallique (3).

4. Procédé selon au moins l'une quelconque des revendications précédentes, **caractérisé en ce que** la partie métallique (3) est un logement d'armature, en particulier un logement de soupape, ou une pièce de fixation.

5. Procédé selon au moins l'une quelconque des revendications précédentes, **caractérisé en ce que** la partie métallique (3) présente une forme (7) sans symétrie de révolution, de telle sorte qu'une fixation en rotation par correspondance de formes soit obtenue par l'incorporation dans le récipient intérieur (1).

6. Procédé selon au moins l'une quelconque des revendications précédentes, **caractérisé en ce que** la partie métallique (3) présente des formations (8) de telle sorte qu'une fixation contre le déplacement axial par correspondance de formes soit obtenue par l'incorporation dans le récipient intérieur (1), en particulier des rainures, des renfoncements ou des rehaussements.

7. Outil de fabrication d'un récipient sous pression comprenant un récipient intérieur en matière plastique thermoplastique et au moins une partie métallique incorporée de manière étanche aux gaz dans un collet du récipient intérieur, par un procédé selon au moins l'une quelconque des revendications 1 à 6, l'outil comprenant un injecteur (9) pour le pressage d'un gaz - en particulier d'air comprimé - et deux moitiés de moule (12), l'injecteur (9) présentant un logement (10, 13) qui est réalisé de manière à recevoir l'au moins une partie métallique, l'outil étant réalisé de manière à pouvoir incorporer la partie métallique (3) sur l'injecteur (9) dans une préforme (2) et entre les deux moitiés de moule (12), et l'injecteur (9) et les moitiés de moule (12) étant réalisés de telle sorte qu'un collet (4) soit réalisé sur la préforme (2) par formage par soufflage au moyen d'une injection de gaz à travers l'injecteur (9) et par fermeture des moitiés de moule (12), le collet comprenant la partie métallique (3), le collet (4), lors du formage par soufflage, étant réalisé de manière à être étanche aux gaz par rapport à la partie métallique (3), **caractérisé en ce que** l'injecteur est entouré par un adaptateur rotatif et fixé axialement, et l'adaptateur est réalisé de manière à recevoir la partie métallique.

8. Outil selon la revendication 7, **caractérisé en ce que** l'adaptateur (10) présente un filetage extérieur (14) de telle sorte que la partie métallique (3) puisse être vissée lorsqu'elle présente un filetage intérieur (11).

9. Outil selon la revendication 7 ou 8, **caractérisé en ce qu'**entre l'injecteur (9) et l'adaptateur (10) est disposé un joint d'étanchéité rotatif et/ou **en ce que** l'adaptateur (10) présente une portion de contact (15) qui est réalisée de manière à être en contact hermétique avec une partie métallique logée (3).

10. Outil selon au moins l'une quelconque des revendications 7 à 9, **caractérisé en ce que** l'outil comprend un entraînement (16) de telle sorte que l'adaptateur (10) puisse être mis rotation par le biais de l'entraînement (16).

11. Outil selon au moins l'une quelconque des revendications 7 à 10, **caractérisé en ce que** l'adaptateur (10) est réalisé sous forme de moule creux et entoure radialement l'injecteur (9).

12. Outil selon au moins l'une quelconque des revendications 7 à 11, **caractérisé en ce qu'**un logement (13) pour une partie métallique supplémentaire (3) est réalisé au niveau d'une extrémité de l'injecteur (9).
